# FASCICULE DE BREVET EUROPEEN

(11) **EP 0 591 072 B1**
(45) Date de publication et mention de la délivrance du brevet: **02.01.1997**
(21) Numéro de dépôt: 93420379.5
(22) Date de dépôt: 21.09.1993
(51) Int. Cl.: H04N 7/18

(54) **Procédé et dispositif pour recueillir et archiver des données relatives à des chaussées et autres voies de circulation**
Verfahren und Vorrichtung zum Sammeln und Speichern von Strassen- und anderen Verkehrswegedaten
Method and device for collecting and storing data related to roads and other traffic routes

(30) Priorité: 28.09.1992 FR 9211853
(43) Date de publication de la demande: 06.04.1994
(73) Titulaire: S. A. BRUNET, F-71570 Pontanevaux (FR)
(72) Inventeur: Brunet, Gilbert, F-71570 Pontanevaux (FR)
(74) Mandataire: Bratel, Gérard

(56) Documents cités:
- EP-A- 0 377 480
- WO-A-90/12922
- WO-A-92/08321
- FR-A- 2 581 006
- US-A- 4 843 463

## Description

La présente invention concerne un procédé pour recueillir et archiver des données relatives à des chaussées et autres voies de circulation, telles que : routes, autoroutes, rues, chemins et autres voiries urbaines ou rurales, voies ferrées, voies navigables, etc... L'invention se rapporte aussi à un dispositif destiné à la mise en oeuvre de ce procédé.

Dans le présent exposé, le terme "données" désigne aussi bien le tracé de la route ou autre voie, que d'autres caractéristiques tels que l'état de la route, les marquages au sol, l'environnement de la route incluant la signalisation, les aménagements et autres affichages situés sur la route ou en bordure de route, les distances d'un point à un autre, les bornes et autres repères, les conditions de visibilité, etc... D'une façon générale, le procédé et le dispositif selon l'invention se rattachent aux systèmes utilisant au moins une caméra vidéo, embarquée sur un véhicule qui se déplace le long de la route ou autre voie à inspecter.

L'utilisation d'au moins une caméra vidéo, montée sur un véhicule automobile se déplaçant le long d'une route, a déjà été proposée à des fins diverses, mais ne correspondant généralement pas à l'objet de la présente invention.

En particulier, ce principe a été envisagé pour le repérage de l'axe central d'une chaussée, afin d'effectuer en continu le prémarquage ou le traçage des lignes médianes séparant les voies de circulation. A ce sujet, on peut citer les documents FR-A-2191096, FR-A-2399692 et FR-A-2609068, ou encore la demande de brevet internationale WO-A-9012922. La précision de tels systèmes est contestable, car leur fonctionnement suppose une possibilité de repérage sûr et précis des bords de la route, ce qui n'est pas assuré dans tous les cas.

On a aussi envisagé la prise de vues d'une route par une caméra embarquée sur un camion ou autre engin, pour visualiser l'état de dégradation de la chaussée et procéder à sa réparation aux endroits qui le nécessitent - voir les documents FR-A-2648168 et FR-A-2648836, et la demande de brevet internationale WO-A-8904498.

Tous ces systèmes connus ont pour point commun d'effectuer une reconnaissance optique de la route suivie d'une action immédiate de traçage de lignes ou de remise en état de la chaussée, sans effectuer aucun stockage des données visualisées qui permettrait un archivage de ces données, et une éventuelle exploitation différée de celles-ci.

Par ailleurs, on connaît des systèmes qui, partant des images d'une route prises par une caméra vidéo embarquée sur un véhicule, traitent ces images par des procédés numériques, pour modéliser et évaluer le tracé de la route. On peut citer ici les demandes de brevets EP-A-0341985, EP-A-0361914, EP-A-0390583 et EP-A-0434455. Toutefois, ces systèmes traitent seulement des données abstraites relatives à la configuration de la chaussée, et ils donnent une "vision" irréelle et incomplète de la route, ne prenant en compte ni les marquages, ni l'environnement de la route.

Or il existe un besoin d'archiver les caractéristiques d'une route ou autre voie de circulation, s'agissant aussi bien de la chaussée elle-même que de ses abords (signalisation, aménagements, panneaux d'affichage), afin de conserver une trace précise des caractéristiques de la route à une époque donnée. Ce besoin est à l'heure actuelle d'autant plus ressenti que les relevés topographiques traditionnels ne sont plus effectués ou remis à jour avec le soin qui devrait leur être accordé pour une exploitation efficace, des cartes ou plans fiables n'étant plus disponibles. Or il est indispensable de pouvoir garder la "mémoire" des caractéristiques telles que les marquages au sol, la signalisation et autres aménagements, pour pouvoir les réimplanter dans leur état antérieur, à la suite d'une réfection de la chaussée ou après d'autres travaux, à l'occasion desquels les marquages, la signalisation ou les aménagements auraient été partiellement ou totalement détruits ou rendus invisibles.

On connaît déjà certains systèmes, dans lequels les images, filmées par une caméra embarquée sur un véhicule, sont enregistrées et stockées sur un support adéquat, et peuvent ainsi être ultérieurement consultées. Dans le document US-A-4843463, il s'agit d'un enregistreur de bord qui permet d'associer, aux images prises par la caméra, des données relatives à la conduite et au fonctionnement du véhicule lui-même, pour en contrôler l'utilisation par exemple dans le cas de véhicules de livraison, ou de véhicules de location. En aucun cas, il ne s'agit ici d'un système permettant d'archiver des données objectives relatives à une chaussée préalablement choisie, sur laquelle circulerait le véhicule.

Le document EP-A-0377480 décrit un autre système, dans lequel plusieurs caméras embarquées sur un véhicule prennent des vues avant et latérales, combinées entre elles par un multiplexage, et enregistrées. D'autres données et paramètres sont enregistrés et stockés séparément. Les images vidéo enregistrées et stockées d'une part sur un premier support, et les données diverses enregistrées et stockées d'autre part sur un second support, sont combinées entre elles seulement "a posteriori", c'est-à-dire au moment où l'on souhaite consulter et exploiter ces informations. Il s'agit ainsi d'un système informatique complexe, lourd et coûteux, difficile à exploiter par le personnel, qui n'associe pas directement les images et les autres données, et qui vise des applications spéciales telles que la réalisation d'un système de "navigation", et non pas des activités courantes telles que l'entretien des chaussées.

L'invention vise à éliminer ces inconvénients, en fournissant un procédé et un dispositif destinés à recueillir et stocker des données concernant les routes et autres voies de circulation, en combinant de façon plus simple et plus directe les images d'une caméra et les autres données utiles de manière à pouvoir ensuite stocker, visualiser et exploiter plus simplement, plus commodément et plus économiquement l'ensemble des données.

A cet effet, l'invention a pour premier objet un procédé pour recueillir et archiver des données relatives à des chaussées et autres voies de circulation, ce procédé consistant essentiellement à filmer un tronçon de chaussée ou autre voie de circulation au moyen d'au moins une caméra vidéo embarquée sur un véhicule parcourant ce tronçon de chaussée ou autre voie, à enregistrer les images vidéo fournies par la caméra sur un moyen de stockage en y incrustant immédiatement des données complémentaires de repérage et/ou d'identification comprenant des lignes de repère et des points de référence et/ou des indications de distance à partir d'un point origine, et à archiver le moyen de stockage des images avec données complémentaires incrustées, pour une consultation et/ou une exploitation ultérieures.

Ainsi, la caméra permet d'avoir une vision complète et réelle d'une portion de route, et les images vidéo prises par cette caméra sont enregistrées sur un moyen de stockage tel qu'une cassette vidéo, avec incrustation de données complémentaires telles que : lignes de repère, points de référence tels que bornes kilométriques ou autres points remarquables, indications de distance à partir d'un point d'origine, etc..., sous forme de signes alphanumériques ou autres symboles, pour permettre l'identification précise de tout endroit filmé le long de la route. L'enregistrement des images et de toutes ces données complémentaires sur une cassette vidéo permet d'archiver les données recueillies, et de les consulter à tout moment en visionnant la cassette, pour connaître l'état d'une chaussée, son tracé exact, les distances réelles d'un point à un autre, les marquages au sol, la signalisation et les autres aménagements, tels qu'ils existaient à une date déterminée, sans avoir à se rendre de nouveau sur place. On mesure ainsi l'intérêt du procédé pour les services de l'Equipement, les entreprises de travaux publics, les entreprises spécialisées dans le marquage routier, etc... Contrairement au système connu du document précité EP-A-0377480, le procédé selon l'invention combine les images filmées et les autres données "a priori", en incrustant ces données sur les images dès la prise de vues, avant enregistrement de l'ensemble sur un support unique et commun tel que cassette vidéo. Il n'est donc plus nécessaire de stocker les images d'une part, et les autres données d'autre part, sur des supports distincts, et de les combiner seulement "a posteriori", c'est-à-dire au moment de la consultation et de l'exploitation, dans un système de traitement informatique complexe et coûteux.

Au-delà de la simple possibilité de consultation des données stockées, le procédé selon l'invention permet un mode d'exploitation particulier de ces données archivées, consistant à afficher une image fixe préalablement enregistrée, avec les données complémentaires associées, correspondant à un point déterminé du tronçon de chaussée ou autre voie, et à comparer cette image fixe avec une nouvelle image mobile filmée par la caméra pendant que le véhicule parcourt à nouveau le même tronçon de chaussée ou autre voie, de manière à déterminer l'instant où le véhicule revient au point précité. Ce mode particulier d'exploitation, mis en oeuvre sur le terrain, permet de réimplanter des marquages et/ou des signalisations aux points précis où ils se trouvaient antérieurement, même s'ils ont disparu en raison d'une réfection complète de la chaussée ou de travaux d'une autre nature.

Le procédé selon l'invention est aussi applicable à l'étude de visibilité d'un tronçon de chaussée, avec utilisation d'un deuxième véhicule qui précède sur ce tronçon de chaussée, d'une distance maintenue sensiblement constante, le véhicule sur lequel est embarquée la caméra vidéo, laquelle fournit ainsi des images montrant l'arrière du véhicule qui le précède.

Selon un autre aspect de l'invention, celle-ci a encore pour objet un dispositif pour recueillir et archiver des données relatives à des chaussées et autres voies de circulation, ce dispositif destiné à la mise en oeuvre du procédé précédemment défini se composant essentiellement, en combinaison, d'une caméra vidéo, d'un moniteur vidéo, d'un incrustateur vidéo, d'un magnétoscope et d'un codeur de distance, tous ces éléments étant interconnectés et étant aptes à être montés sur un véhicule. La caméra filme la route parcourue par le véhicule, et transmet ses images au moniteur de contrôle et au magnétoscope. L'incrustateur sert à superposer aux images de la route des données complémentaires de repérage, qui sont elles aussi transmises au moniteur et au magnétoscope, ces données incluant des indications de distance parcourue ou de position du véhicule, fournies par le codeur. Ainsi, le magnétoscope enregistre sur une cassette vidéo les images filmées avec données de référence incrustées, ce qui fournit directement le moyen d'archivage complet et exploitable que l'on souhaite obtenir.

De toute façon, l'invention sera mieux comprise à l'aide de la description qui suit, en référence au dessin schématique annexé représentant, à titre d'exemple non limitatif, une forme d'exécution de ce dispositif pour recueillir et archiver des données relatives à des chaussées et autres voies de circulation :
Figure 1 est un schéma de principe d'un dispositif conforme à la présente invention, embarqué sur un véhicule ;
Figure 2 est un schéma synoptique fonctionnel du dispositif de figure 1 ;
Figure 3 montre un exemple d'image s'affichant sur l'écran du moniteur vidéo du dispositif ;
Figure 4 illustre, toujours par référence à l'écran du moniteur, un mode d'exploitation particulier de ce dispositif ;
Figure 5 est une vue schématique illustrant une autre application particulière de l'invention ;
Figure 6 montre un exemple d'image s'affichant sur l'écran du moniteur vidéo, dans le cas de l'application illustrée par la figure 5.

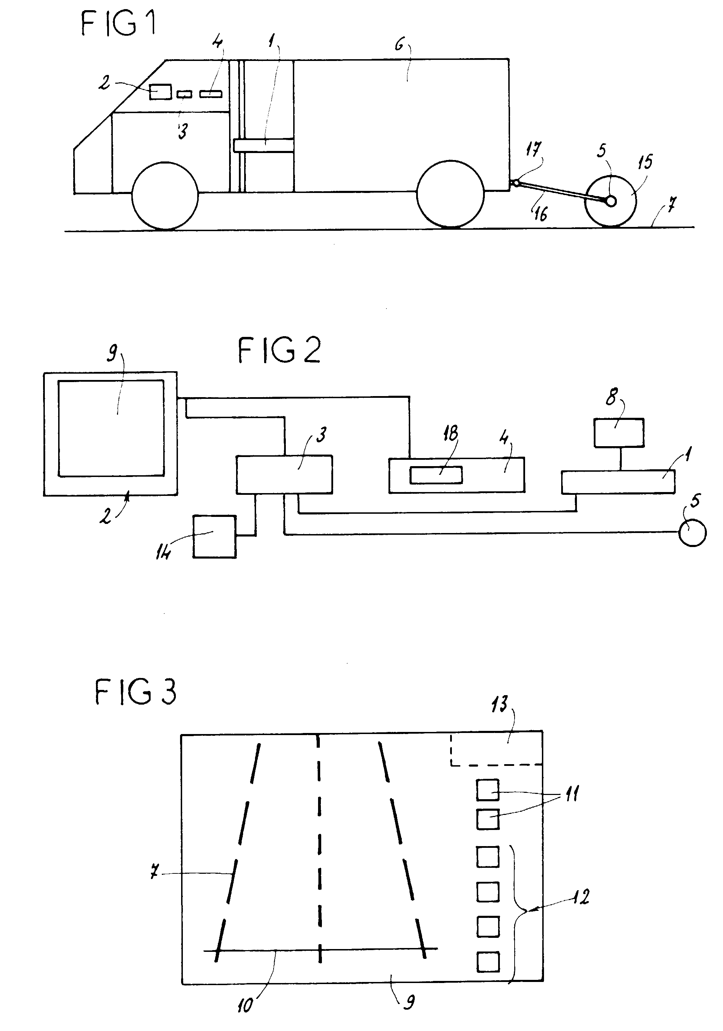

Le dispositif, représenté dans son ensemble aux figures 1 et 2, se compose principalement d'une caméra couleur vidéo 1, d'un moniteur couleur vidéo 2, d'un incrustateur vidéo 3, d'un magnétoscope 4 et d'un codeur 5, tous ces éléments étant interconnectés. Cet équipement est monté sur un véhicule automobile 6 adapté, tel qu'une fourgonnette.

Plus particulièrement, la caméra vidéo 1 est disposée sur le véhicule 6 de manière à pouvoir filmer la route 7 sur laquelle se déplace ce véhicule 6. La caméra 1 peut être portée par une tourelle, et elle permet d'avoir une vision complète et réelle de la route, cette caméra 1 possédant avantageusement un zoom avec une commande indiquée en 8.

Le moniteur vidéo 2 est disposé de manière que son écran 9 soit visible par le conducteur 6 et/ou par un opérateur. Ce moniteur 2 transmet ainsi l'image de la route 7, filmée par la caméra 1, complétée par diverses incrustations telles que : ligne de repère 10, comptage de points de référence en 11, compris par exemple de 0 à 99, comptage de distances en 12, compris par exemple de 0 à 9999 mètres, texte libre tel que nom de la route, date, heure,... formant un cartouche en 13.

L'incrustateur 3 sert à incruster les lignes de repère, les points de référence et autres données alphanumériques dans l'image, en combinaison avec un clavier 14. Cet incrustateur 3 se compose de plusieurs cartes électroniques, incluant notamment :
- une carte d'incrustation de lignes de repère, avec la possibilité d'avoir plusieurs lignes de repère ;
- une carte d'incrustation de points de référence, qui a pour fonction de repérer sur l'image la position exacte de chaque point de référence, en lui affectant une valeur numérique avec la possibilité de remettre à zéro, d'augmenter ou de diminuer cette valeur ;
- une carte d'incrustation de distance, servant à donner une valeur de distance (de 0 à 9999 mètres comme déjà indiqué plus haut) avec une très grande précision, qui peut être de 100 points par mètre, suivant le capteur 5 choisi, ceci toujours avec possibilité de remise à zéro du compteur ;
- un générateur de caractères pour film vidéo, pour la création d'un titre immédiat et son insertion sur l'image.

L'incrustateur 3 possède encore, utilement, une commande de remise à zéro générale, pour l'ensemble des compteurs.

Cet incrustateur 3 possède plusieurs entrées ou sorties de liaison respectives avec la caméra 1, avec le moniteur 2, avec le magnétoscope 4 et avec le codeur 5, comme montré sur la figure 2.

Le codeur 5 peut prendre la forme d'un codeur absolu, associé à une roue avec pneumatique 15, venant en contact avec la route 7 et montée à l'extrémité d'un bras 16 relié, par un axe d'articulation 17, à l'arrière du véhicule 6. La rotation de la roue 15 actionne le codeur 5 qui, tenant compte du nombre de tours de la roue 15 par unité de longueur parcourue, fournit des impulsions de signification précise à l'incrustateur 3, les distances parcourues étant ainsi mesurées et enregistrées.

Le magnétoscope 4 permet d'enregistrer sur une cassette vidéo 18 les données de la caméra 1 et de l'incrustateur 3, et de marquer la date et l'heure, pendant que l'on effectue un relevé. Ultérieurement, le même magnétoscope 4 est utilisable pour faire un arrêt sur image, en vue de la réimplantation des données (comme précisé plus bas), et pour visualiser n'importe quel point ou tronçon de la route 7 sans avoir à effectuer un nouveau déplacement sur le terrain.

Dans l'utilisation en "saisie de données", le véhicule 6 se déplace à vitesse régulière sur la route 7, la caméra 1 filmant en continu la route parcourue et son environnement, en fournissant une image qui, avec les données complémentaires fournies par l'incrustateur 3, s'affiche sur l'écran 9 du moniteur 2 et est simultanément enregistrée par le magnétoscope 4. On obtient donc, après un certain parcours sur la route 7, une cassette vidéo enregistrée 18 avec une image continue de cette route 7, complétée par des indications de points de référence tels que des bornes, et de distances sous forme d'incrustations, les distances mesurées se référant naturellement à une origine déterminée. Pour une image instantanée quelconque, la ligne de repère 10 indique le point de la route 7 correspondant à la valeur de distance mesurée et enregistrée en corrélation avec cette image.

La cassette 18 ainsi enregistrée permet de conserver en mémoire, et de consulter à tout moment, les caractéristiques de la route 7 : état de la chaussée, son tracé exact, distances d'un point à un autre, marquages, signalisations et autres aménagements, en évitant tout déplacement sur le terrain.

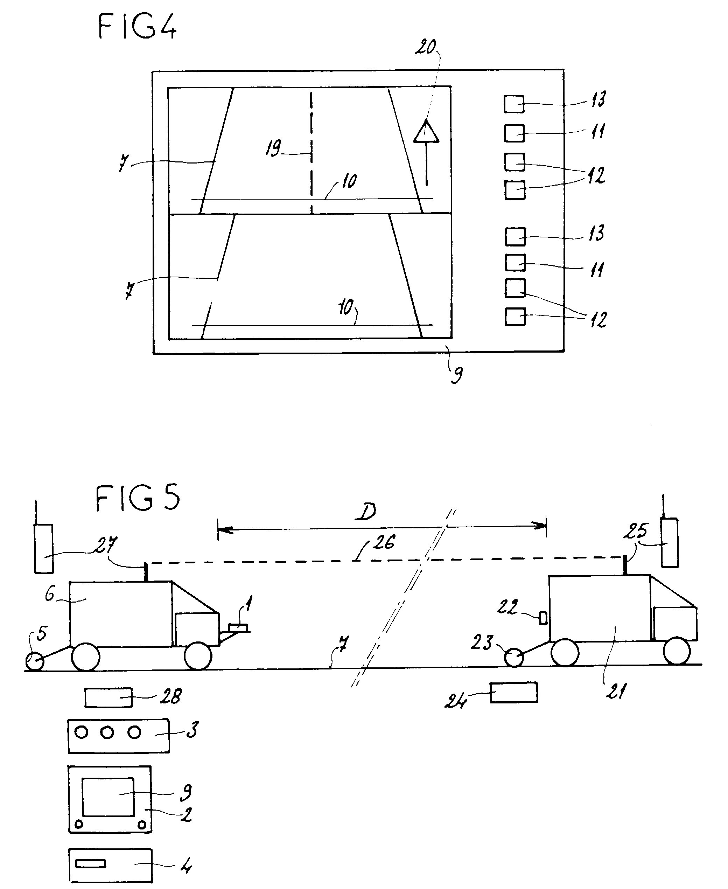

Un mode d'exploitation particulier, pouvant être mis en oeuvre à partir du moment où l'on dispose d'un enregistrement sur cassette, est illustré par la figure 4. On prend ici pour hypothèse qu'il s'agit de retrouver un point précis de la route 7, par exemple pour refaire un marquage 19 sur la chaussée après réfection du revêtement de celle-ci, ou pour remettre en place une signalisation 20 disparue pour une raison quelconque. L'écran 9 du moniteur 2 est alors subdivisé en deux images superposées. L'image supérieure est une image fixe, fournie par le magnétoscope 4 à partir d'une cassette 18 préalablement enregistrée et archivée, contenant toutes les données relatives à l'état antérieur de la route 7. L'image inférieure donne la "vision" réelle de la route 7, telle qu'elle est vue par la caméra 1 pendant que le véhicule 6 avance. Les compteurs associés aux deux images étant mis en concordance, il sera facile de déterminer à quel instant le véhicule 6 est parvenu au point de la route 7 représenté par l'image supérieure fixe. On pourra ainsi replacer le marquage 19 et la signalisation 20 à l'endroit précis où ils se trouvaient précédemment. La même opération peut ensuite être répétée pour d'autres points remarquables à retrouver. Ce mode d'utilisation est facilité en prévoyant la possibilité de changer la position initiale des compteurs de points de référence et de distance, de manière à pouvoir "recaler" le compteur indiquant la position réelle du véhicule sur le compteur correspondant à la cassette précédemment enregistrée.

Naturellement, ce mode opératoire permet aussi de réaliser, après des travaux sur une route, un nouvel enregistrement sur cassette complet ou partiel, constituant en quelque sorte une remise à jour de l'enregistrement précédent.

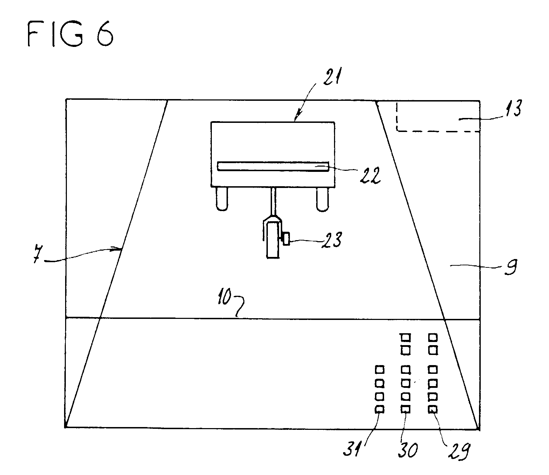

Les figures 5 et 6, auxquelles il est enfin fait référence, illustrent une autre application particulière de l'invention, concernant l'étude de visibilité sur un tronçon de chaussée 7.

Dans cette application, on utilise toujours un véhicule automobile 6 avec caméra vidéo embarquée 1, circulant sur la chaussée 7 à étudier. Le véhicule 6 est précédé d'un autre véhicule 21, qui circule sur la même chaussée 7 devant le véhicule 6, à une distance D maintenue constante d'une manière précisée ci-après, par exemple égale à 200 mètres. La caméra 1 du véhicule suiveur 6 fournit ainsi des images de l'arrière du véhicule 21 qui le précède, l'arrière de ce véhicule 21 pouvant comporter une mire 22 située, par exemple, à environ un mètre au-dessus du sol.

Le véhicule 21 comporte en outre un codeur 23, qui délivre un signal de distance parcourue dirigé vers un boîtier afficheur 24 de ce véhicule 21, et vers un émetteur 25. Par une liaison hertzienne (liaison codée VHF)26, ce signal est transmis à un récepteur 27 porté par le véhicule suiveur 6, et il est incrusté sur l'écran 9 du moniteur 2 de ce véhicule 6.

Lorsque le véhicule suiveur 6 avance, son propre codeur 5 transmet la distance parcourue par ce véhicule lui-même à son incrustateur 3, ainsi qu'à un boîtier d'affichage 28. L'incrustateur 3 calcule à tout instant la différence entre les données des deux codeurs 5 et 23, et il affiche cette différence sur le moniteur vidéo 2, ce qui permet au conducteur du véhicule suiveur 6 de garder une distance constante D par rapport au véhicule 21 qui le précède.

Le boîtier d'incrustation 3 permet d'incruster simultanément d'autres données (distances métriques, traits pour repérage), et l'ensemble de ces données est enregistré sur une cassette vidéo comme décrit en détail plus haut, ce qui permet de retrouver et "relire" des points précis.

La figure 6 montre, à titre d'exemple, l'image visible sur l'écran 9 du moniteur vidéo 2 embarqué sur le véhicule suiveur 6, image qui est enregistrée par le magnétoscope 4. Cette image montre, si les conditions instantanées de visibilité le permettent, l'arrière du véhicule 21 avec sa mire 22, tandis que la ligne de repère 10 correspond à l'avant du véhicule 6. Les trois compteurs 29,30 et 31, qui s'incrustent sur l'image, affichent respectivement la position du véhicule 6, la position de l'autre véhicule 21 et l'écart de position (distance D) des deux véhicules.

Dans cette dernière application, le procédé et le dispositif selon l'invention permettent d'effectuer des mesures précises de visibilité sur route, autoroute ou autre type de chaussée, pour déterminer les points singuliers (virages, dos d'âne, etc...) où la visibilité est réduite, et pour définir ensuite, en fonction de la distance de visibilité mesurée, la signalisation et notamment le marquage des chaussées par bandes continues, bandes discontinues, flèches de rabattement, l'étude s'effectuant en consultant les images enregistrées.

Bien entendu, le procédé et le dispositif selon l'invention peuvent encore avoir d'autres finalités, principales ou secondaires. En particulier, ils permettent de constituer, en relation avec les dates d'enregistement des données, des preuves irréfutables concernant l'état de la chaussée, la position d'un panneau, etc... par exemple pour des expertises relatives à des accidents, ou en cas de contestations concernant l'implantation de panneaux d'affichage en bordure d'une route, ceci sans avoir à effectuer des déplacements plus ou moins lointains.

Comme il va de soi, et comme il ressort de ce qui précède, l'invention ne se limite pas à la seule forme d'exécution de ce dispositif pour recueillir et archiver des données relatives à des chaussées qui a été décrite ci-dessus, à titre d'exemple ; elle en embrasse, au contraire, toutes les variantes de réalisation et d'application respectant le même principe. C'est ainsi, notamment, que l'on ne s'éloignerait pas du cadre de l'invention par le recours à tous moyens équivalents de ceux décrits par exemple en réalisant l'enregistrement final non pas sur une cassette vidéo mais sur un vidéodisque ou sur tout autre support approprié. Le codeur peut aussi être de tout type, en liaison directe ou indirecte avec la route. On peut aussi envisager d'utiliser les diverses fonctionnalités de l'incrustateur selon d'autres combinaisons, ou en utilisant uen seule fonction, telle que les seules incrustations de distance dans le cas ou celles-ci fournissent un repérage suffisant pour l'exploitation envisagée, ou encore en prévoyant l'incrustation de données supplémentaires, y compris l'incrustation de commentaires sonores. Enfin, le domaine d'application du procédé n'est pas limité aux routes, mais il englobe l'archivage de données relatives à toutes voies de circulation (autoroutes, rues, chemins, voies ferrées, canaux, etc...), le dispositif pouvant être en conséquence fixé sur tout type de véhicule.

## Revendications

1. Procédé pour recueillir et archiver des données relatives à des chaussées et autres voies de circulation, dans lequel on filme un tronçon de chaussée (7) ou autre voie de circulation au moyen d'au moins une caméra vidéo (1) embarquée sur un véhicule (6) parcourant ce tronçon de chaussée ou autre voie, les images vidéo étant enregistrées, caractérisé en ce qu'on enregistre les images vidéo fournies par la caméra (1) sur un moyen de stockage (18) en y incrustant immédiatement des données complémentaires de repérage et/ou d'identification comprenant des lignes de repère (10) et des points de référence (11) et/ou des indications de distance à partir d'un point origine (12), et en ce qu'on archive le moyen de stockage (18) des images avec données complémentaires incrustées, pour une consultation et/ou une exploitation ultérieures.

2. Procédé selon la revendication 1, caractérisé en ce que le moyen de stockage des images avec données complémentaires incrustées est une cassette vidéo (18).

3. Procédé selon la revendication 1 ou 2, caractérisé en ce que les données archivées sont exploitées en affichant une image fixe préalablement enregistrée, avec les données complémentaires (10,11,12,13) associées, correspondant à un point déterminé du tronçon de chaussée (7) ou autre voie, et à comparer cette image fixe avec une nouvelle image mobile filmée par la caméra (1) pendant que le véhicule (6) parcourt à nouveau le même tronçon de chaussée (7) ou autre voie, de manière à déterminer l'instant où le véhicule (6) revient au point précité.

4. Procédé selon la revendication 3, caractérisé en ce qu'il est appliqué à la réimplantation de marquages au sol (19) et/ou de signalisations (20).

5. Procédé selon la revendication 1 ou 2, caractérisé en ce qu'il est appliqué à l'étude de visibilité d'un tronçon de chaussée, avec utilisation d'un deuxième véhicule (21) qui précède sur ce tronçon de chaussée (7), d'une distance (D) maintenue sensiblement constante, le véhicule (6) sur lequel est embarquée la caméra vidéo (1), laquelle fournit ainsi des images montrant l'arrière du véhicule (21) qui le précède.

6. Dispositif pour la mise en oeuvre du procédé selon l'une quelconque des revendications 1 à 5, comportant, en combinaison, une caméra vidéo (1), un moniteur vidéo (2), un magnétoscope (4) et un codeur de distance (5), tous ces éléments (1 à 5) étant aptes à être montés sur un véhicule (6) et étant interconnectés, le dispositif étant caractérisé en ce qu'il comporte en plus un incrustateur vidéo (3) adapté pour incruster immédiatement des données complémentaires de repérage et/ou d'identification comprenant des lignes de repère (10) et des points de référence (11) et/ou des indications de distance à partir d'un point origine (12), dans les images vidéo fournies par la caméra (1), et en ce que le magnétoscope (4) est adapté à enregistrer les images avec données complémentaires incrustées.

7. Dispositif selon la revendication 6, caractérisé en ce que l'incrustateur vidéo (3) comprend une carte d'incrustation de lignes de repère (10), une carte d'incrustation de points de référence (11), une carte d'incrustation d'indications de distance (12) et un générateur de caractères permettant de former un cartouche (13).

8. Dispositif selon la revendication 6 ou 7, caractérisé en ce que le codeur de distance est un codeur absolu (5), associé à une roue (15) reliée à l'arrière du véhicule (6) et venant en contact avec la chaussée (7), ce codeur (5) fournissant à l'incrustateur (3) des impulsions représentatives des distances parcourues.

9. Dispositif selon l'une quelconque des revendications 6 à 8, plus particulièrement destiné à la mise en oeuvre du procédé selon la revendication 5 appliqué à l'étude de visibilité d'un tronçon de chaussée, caractérisé en ce que les deux véhicules (6,21) devant se suivre à une distance sensiblement constante (D) sur le tronçon de chaussée (7) étudié comportent, l'un et l'autre, un codeur de distance (5,23) et un boîtier afficheur de distance (24,28), en ce que le signal délivré par le codeur (23) du véhicule situé le plus en avant (21) est transmis par une liaison sans fil (26) au véhicule suiveur (6), et en ce que l'incrustateur (3) monté sur ce véhicule (6) est prévu pour calculer la différence entre les données des deux codeurs (5,23) et faire afficher cette différence sur le moniteur vidéo (2).

## Patentansprüche

1. Verfahren zum Sammeln und Archivieren von Straßen- und anderen Verkehrswegedaten, in dem man einen Streckenabschnitt der Straße (7) oder eines anderen Verkehrsweges mittels wenigstens einer Videokamera (1), die sich an Bord eines Fahrzeuges befindet, welches den betreffenden Streckenabschnitt der Straße oder des Verkehrsweges abfährt, wobei die Videobilder aufgenommen werden, filmt, **dadurch gekennzeichnet**, **daß** man sie durch die Kamera (1) auf einem Speichermittel (18) derart registriert, daß man an diese sofort ergänzende Daten zur Kennzeichnung und/oder Identifizierung anlagert, wobei die Daten Markierungslinien (10) und Referenzpunkte (11) und/oder Entfernungsindikatoren, ausgehend von einem Bezugspunkt (12) beinhalten, und daß man das Speichermittel (18) der Bilder mit den angelagerten ergänzenden Daten für eine nachfolgende Beratung und/oder Auswertung archiviert.

2. Verfahren nach Anspruch 1, **dadurch gekennzeichnet**, **daß** das Speichermittel der Bilder mit den ergänzenden angelagerten Daten eine Videokassette (18) ist.

3. Verfahren nach Anspruch 1 oder 2, **dadurch gekennzeichnet, daß** die gespeicherten Daten dergestalt ausgewertet werden, daß ein festes, vorher registriertes Bild, das mit den ergänzenden Daten (10, 11, 12, 13) versehen und einem bestimmten Punkt des Streckenabschnittes der Straße (7) oder des anderen Weges entspricht, projiziert wird und das dieses feste Bild mit einem neuen beweglichen durch die Kamera (1) gefilmten Bild verglichen wird, das aufgenommen wird, während das Fahrzeug (6) von neuem den gleichen Streckenabschnitt der Straße (7) oder des anderen Weges durchfährt, in der Weise, um den Moment zu bestimmen, wo das Fahrzeug (6) am bestimmten Punkt ankommt.

4. Verfahren nach Anspruch 3, **dadurch gekennzeichnet, daß** es für die Standortwahl von Bodenmarkierungen (19) und/oder Beschilderungen (20) angewendet wird.

5. Verfahren nach Anspruch 1 oder 2, **dadurch gekennzeichnet, daß** es für das Studium der Sichtverhältnisse eines Streckenabschnittes einer Straße eingesetzt wird unter Benutzung eines zweiten Fahrzeuges (21), welches auf diesem Streckenabschnitt der Straße (7) vorausfährt in einem ungefähr gleichbleibend gehaltenen Abstand zum Fahrzeug (6), auf dem die Videokamera (1) aufgebaut ist, wobei diese Kamera auch Bilder erstellt, die die Rückseite des vorausfahrenden Fahrzeuges (21) zeigen.

6. Vorrichtung für die Anwendung des Verfahrens nach einem der Ansprüche 1 - 5, die in Kombination eine Videokamera (1), einen Videomonitor (2), einen Videorekorder (4) und einen Entfernungskodierer (5) beinhaltet, wobei all diese Elemente (1 - 5) dazu vorgesehen sind, auf einem Fahrzeug (6) aufgebaut zu sein und miteinander verbunden zu sein, wobei die Vorrichtung dadurch gekennzeichnet ist, daß sie darüber hinaus einen Videoinkrustierer (3) beinhaltet, der in der Lage ist, unmittelbar ergänzende Daten zur Kennzeichnung und/oder Identifizierung, wobei die Daten Markierungslinien (10) und Referenzpunkte (11) und/oder Entfernungsindikatoren ausgehend von einem Bezugspunkt (12) beinhalten, an die durch die Kamera (1) aufgenommenen Bilder anzulagern, und daß der Videorekorder (4) in der Lage ist, die mit den ergänzenden angelagerten Daten versehenen Bilder aufzunehmen.

7. Vorrichtung nach Anspruch 6, **dadurch gekennzeichnet, daß** der Videoinkrustierer (3) eine Karte zur Anlagerung der Markierungslinien (10), eine Karte zur Anlagerung der Referenzpunkte (11), eine Karte zur Anlagerung der Entfernungsindikatoren (12) und einen Zeichengenerator beinhaltet, der es erlaubt, eine Kartusche (13) zu bilden.

8. Vorrichtung nach Anspruch 6 oder 7, **dadurch gekennzeichnet, daß** der Entfernungskodierer ein Absolutkodierer (5) ist, der an ein Rad (15) angebaut ist, welches an der Rückseite des Fahrzeuges (6) angeordnet ist und mit der Straße (7) in Kontakt kommt, wobei der Kodierer (5) dem Inkrustierer (3) Impulse liefert, die die durchfahrenen Entfernungen zeigen.

9. Vorrichtung nach einem der Ansprüche 6 - 8, insbesondere zur Durchführung des Verfahrens nach Anspruch 5, angewendet auf das Studium der Sichtverhältnisse eines Streckenabschnittes einer Straße, **dadurch gekennzeichnet, daß** die beiden Fahrzeuge (6, 21), die in einer gewissen gleichen Entfernung (D) auf dem zu studierenden Streckenabschnitt der Straße (7) aufeinander folgen, das eine wie das andere einen Entfernungskodierer (5, 23) und ein Entfernungsanzeigegerätgehäuse (24, 28) beinhaltet, daß das durch den Kodierer (23) des ersten vorausfahrenden Fahrzeuges (21) gelieferte Signal durch eine drahtlose Verbindung (26) auf das folgende Fahrzeug (6) übertragen wird, und daß der Inkrustierer (3), der auf diesem Fahrzeug (6) angeordnet ist, dazu vorgesehen ist, den Unterschied zwischen den Daten der beiden Kodierer (5, 23) zu berechnen und diesen Unterschied auf dem Videomonitor (2) zur Anzeige zu bringen.

## Claims

1. Method for collecting and archiving data related to roads and other traffic routes, in which a stretch of road (7) or another traffic route is filmed by means of at least one video camera (1) mounted on a vehicle (6) travelling along this stretch of road or other route, the video images being recorded, characterised in that the video images supplied by the camera (1) are recorded on a storage means (18), with complementary reference and/or identification data comprising reference lines (10) and reference points (11) and/or indications of distance from a point of origin (12) being overlaid immediately, and in that the means (18) of storing the images with complementary data overlaid is archived for subsequent consultation and/or use.

2. Method according to Claim 1, characterised in that the means of storing the images with overlaid complementary data is a video cassette (18).

3. Method according to Claim 1 or 2, characterised in that the archived data are used by displaying a previously recorded still image, with the associated complementary data (10, 11, 12, 13), corresponding to a given point in the stretch of road (7) or other route, and by comparing this still image with a new moving image filmed by the camera (1) while the vehicle (6) travels along the same stretch of road (7) or other route again, so as to determine the instant where the vehicle (6) returns to the aforementioned point.

4. Method according to Claim 3, characterised in that it is used for re-installing markings (19) on the ground and/or road signs (20).

5. Method according to Claim 1 or 2, characterised in that it is applied to the study of the visibility on a stretch of road, with the use of a second vehicle (21), which on this stretch of road (7), drives at a distance (D), kept substantially constant, in front of the vehicle (6) on which the video camera (1) is mounted, the camera thus supplying images showing the rear of the vehicle (21) in front.

6. Device for implementing the method according to any one of Claims 1 to 5, having, in combination, a video camera (1), a video monitor (2), a video recorder (4) and a distance coder (5), all these elements (1 to 5) being capable of being mounted on a vehicle (6) and being interconnected, the device being characterised in that it also has a video overlayer (3) adapted for immediately overlaying complementary reference and/or identification data comprising reference lines (10) and reference points (11) and/or indications of distance from a point of origin (12) on the video images supplied by the camera (1), and in that the video recorder (4) is adapted for recording the images with overlaid complementary data.

7. Device according to Claim 6, characterised in that the video overlayer (3) comprises a card for overlaying reference lines (10), a card for overlaying reference points (11), a card for overlaying indications of distance (12) and a character generator allowing a title block (13) to be formed.

8. Device according to Claim 6 or 7, characterised in that the distance coder is an absolute coder (5), associated with a wheel (15) connected to the rear of the vehicle (6) and coming into contact with the road (7), this coder (5) supplying the overlayer with pulses representing the distances travelled.

9. Device according to any one of Claims 6 to 8, more particularly designed for the implementation of the method according to Claim 5, applied to the study of the visibility on a stretch of road, characterised in that the two vehicles (6, 21) having to follow one another at a substantially constant distance (D) on the stretch of road (7) studied each have a distance coder (5, 23) and a distance display unit (24, 28), in that the signal delivered by the coder (23) of the vehicle in front (21) is transmitted via a wireless link (26) to the vehicle following (6), and in that the overlayer (3) mounted on this vehicle (6) is designed to calculate the difference between the data of the two coders (5, 23) and displaying this difference on the video monitor (2).
